(19) Europäisches Patentamt
European Patent Office
Office européen des brevets

(11) Numéro de publication : **0 443 004 B1**

# (12) FASCICULE DE BREVET EUROPEEN

(45) Date de publication du fascicule du brevet : **16.02.94 Bulletin 94/07**

(51) Int. Cl.$^5$ : **C01B 33/34,** B01J 29/08

(21) Numéro de dépôt : **90913489.2**

(22) Date de dépôt : **11.09.90**

(86) Numéro de dépôt international : **PCT/FR90/00599**

(87) Numéro de publication internationale : **WO 91/04226 04.04.91 Gazette 91/08**

## (54) SYNTHESE DE ZEOLITHES ALUMINOSILICATE A STRUCTURE FAUJASITE.

(30) Priorité : **13.09.89 FR 8911949**

(43) Date de publication de la demande : **28.08.91 Bulletin 91/35**

(45) Mention de la délivrance du brevet : **16.02.94 Bulletin 94/07**

(84) Etats contractants désignés : **AT BE CH DE DK ES FR GB IT LI LU NL SE**

(56) Documents cités :
**US-A- 2 882 244**
**US-A- 3 130 007**
**Zeitschrift für Chemie, vol. 13, no. 3, 1973, Leipzig, DE; F. WOLF et al.: "Ueber den Einfluss organischer Verbindungen auf die hydrothermale Synthese zeolithischer Molekularsiebe der Typen A, X und Y", pages 109-110, voir page 109, colonne de droite, alenéa 9**

(73) Titulaire : **SOCIETE NATIONALE ELF AQUITAINE**
**Tour Elf, 2, Place de la Coupole, La Défense 6**
**F-92400 Courbevoie (FR)**

(72) Inventeur : **DELPRATO, François**
**21, rue du Haut-Point**
**F-68400 Riedisheim (FR)**
Inventeur : **GUTH, Jean-Louis**
**59, rue Bellevue**
**F-68200 Brunstatt (FR)**
Inventeur : **HOFFNER, Frédérique**
**4, rue des Teinturiers**
**F-68550 S.-Amarin (FR)**
Inventeur : **ZIVKOV, Catherine**
**55, lotissement du Brunat**
**F-40180 Narosse (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue Saint-Denis, 75001 PARIS

## Description

L'invention a trait à un procédé de synthèse de zéolithes à charpente aluminosilicate appartenant à la famille structurale de la faujasite. Elle concerne encore les produits obtenus et leur application en adsorption et catalyse.

Les zéolithes sont des tectosilicates cristallisés. Les structures sont constituées par des assemblages de tétraèdres $TO_4$ formant une charpente tridimensionnelle par la mise en commun des atomes d'oxygène. Dans les zéolithes du type aluminosilicate qui sont les plus communes, T représente le silicium tétravalent ainsi que l'aluminium trivalent. La charpente tridimensionnelle précitée présente des cavités et canaux qui possèdent des dimensions moléculaires et accueillent les cations compensant le déficit de charge lié à la présence de l'aluminium trivalent dans les tétraèdres $TO_4$, lesdits cations étant généralement échangeables.

D'une manière générale, la composition des zéolithes peut être représentée par la formule brute ($M_{2/n}O$, $Y_2O_3$, x $ZO_2$) à l'état déshydraté et calciné. Dans cette formule Z et Y désignent respectivement les éléments tétravalents et trivalents des tétraèdres $TO_4$, M représente un élément électropositif de valence n tel qu'un métal alcalin ou alcalinoterreux et constitue le cation de compensation et x est un nombre pouvant varier de 2 à théoriquement l'infini auquel cas la zéolithe est une silice.

Chaque type de zéolithe possède une structure microporeuse distincte. La variation des dimensions et formes des micropores d'un type à l'autre, entraîne des changements dans les propriétés adsorbantes. Seules les molécules ayant certaines dimensions et formes sont capables d'entrer dans les pores d'une zéolithe particulière. En raison de ces caractéristiques remarquables les zéolithes conviennent tout particulièrement pour la purification ou la séparation de mélanges gazeux ou liquides comme, par exemple, la séparation d'hydrocarbures par adsorption sélective.

La composition chimique, avec en particulier la nature des éléments présents dans les tétraèdres $TO_4$ et la nature des cations de compensation échangeables, est également un facteur important intervenant dans la sélectivité de l'adsorption et surtout dans les propriétés catalytiques de ces produits. Ils sont utilisés comme catalyseurs ou supports de catalyseurs dans le craquage, le reformage et la modification d'hydrocarbures ainsi que dans l'élaboration de nombreuses molécules.

De nombreuses zéolithes existent dans la nature, ce sont des aluminosilicates dont les disponibilités et les propriétés ne répondent pas toujours aux exigences des applications industrielles. De ce fait, la recherche de produits ayant des propriétés nouvelles a conduit à la synthèse d'une grande variétés de zéolithes parmi lesquelles on peut signaler la zéolithe A (US-A-2882243), la zéolithe X (US-A-2882244), la zéolithe Y (US-A-3130007).

Les zéolithes de la famille structurale de la faujasite sont caractérisées par une structure de charpente tridimensionnelle qui peut être décrite à partir de l'assemblage de modules appelés cube-octaèdres. Chacun de ces modules est constitué de 24 tétraèdres contenant les éléments Si et Al dans notre cas et pontés par l'oxygène selon le principe décrit plus haut. Dans le cube-octaèdre, les tétraèdres sont liés de manière à former huit cycles à six tétraèdres et six cycles à quatre tétraèdres.

Chaque cube-octaèdre est relié en coordinance tétraédrique, à travers quatre cycles à six tétraèdres, à quatre cube-octaèdres voisins.

Il est commode, pour montrer les relations qui unissent les différents membres de la famille structurale, de considérer des plans structuraux dans lesquels les cube-octaèdres sont disposés aux sommets d'un réseau plan d'hexagones. Chaque cube-octaèdre est aussi relié à trois voisins dans le plan structural.

La quatrième direction de liaison est dirigée alternativement de part et d'autre du plan structural et permet de relier les cube-octaèdres entre plans structuraux voisins et parallèles.

Tous les solides appartenant à la famille structurale de la faujasite possèdent des canaux interconnectés d'environ 0,8nm de diamètre. Ainsi la faujasite est une zéolithe à charpente aluminosilicate dont la structure correspond à l'empilement de trois plans structuraux distincts, ABC correspondant à une structure de symétrie cubique.

On peut obtenir, par synthèse à partir d'un gel aluminosilicate des composés de la même structure que la faujasite.

Le procédé général de synthèse des zéolithes à charpente aluminosilicate appartenant à la famille structurale de la faujasite consiste en une cristallisation hydrothermale de gels aluminosilicates sodiques de compositions particulières et renfermant un agent structurant consistant en un cation métallique.

Plus précisément un tel procédé consiste à réaliser tout d'abord un mélange réactionnel ayant un pH supérieur à 10 et renfermant de l'eau, une source de silicium tétravalent, une source d'aluminium trivalent, une source d'ions hydroxydes sous la forme d'une base forte, une source de cations métalliques $M^{n+}$, n étant la valence de M, de manière à obtenir un gel aluminosilicate ayant la composition voulue pour permettre sa cristallisation en un composé de la famille structurale de la faujasite, puis à maintenir le gel obtenu, directement

ou après murissement préalable, à une température au plus égale à 150°C et sous une pression au moins égale à la pression autogène du mélange constitué par ledit gel pendant une durée suffisante pour effectuer la cristallisation de ce gel.

Comme indiqué plus haut, un tel procédé ne permet pas de synthétiser des zéolithes à charpente aluminosilicate ayant la structure de symétrie cubique de la faujasite et un rappport Si/Al supérieur à 3.

On a maintenant trouvé que certaines molécules organiques, appartenant à la famille des polyoxydes d'alcoylène ont la propriété d'orienter la cristallisation des gels aluminosilicates vers des zéolithes de la famille structurale de la faujasite caractérisées par des rapports Si/Al pouvant être supérieurs à 3. Ces molécules apportent un effet stabilisant important, qui permet de diminuer la concentration des ions hydroxydes dans le milieu de synthèse, ce qui a pour effet l'obtention d'un rapport Si/Al plus élevé et une amélioration substantielle du rendement.

L'invention a donc pour objet un procédé de préparation de zéolithes à charpente aluminosilicate appartenant à la famille structurale de la faujasite et présentant un rapport Si/Al supérieur à 1 et pouvant dépasser 3, ledit procédé étant du type dans lequel on réalise tout d'abord un mélange réactionnel ayant un pH supérieur à 10 et renfermant de l'eau, une source de silicium tétravalent, une source d'aluminium trivalent, une source d'ions hydroxydes sous la forme d'une base forte et un agent structurant ST de manière à obtenir un gel aluminosilicate, ayant la composition voulue pour permettre sa cristallisation en un composé de la famille structurale de la faujasite, puis on maintient le gel obtenu, éventuellement après murissement préalable, à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire l'agent structurant et produire la zéolithe, et il se caractérise en ce que l'agent structurant ST consiste en au moins un composé choisi parmi les polyoxydes d'alcoylène répondant à la formule

$$R-O\left[C_mH_{2m-1}X-O\right]_n R'$$

dans laquelle R et R', identiques ou différents, représentent chacun un atome d'hydrogène ou un radical alcoyle en $C_1$ à $C_4$, X désigne un atome d'hydrogène ou un radical -OH, m est égal à 2 ou 3 et peut être différent d'un motif à l'autre et n est un nombre allant de 1 à 12.

Avantageusement la quantité d'agent structurant ST présente dans le mélange réactionnel destiné à former le gel est telle que le rapport molaire ST : $Al^{III}$ aille de 0,1 à 4, ledit rapport allant de préférence de 0,1 à 2.

En particulier, les ingrédients constituant le mélange réactionnel donnant naissance au gel aluminosilicate sont utilisés de telle sorte que ledit gel ait, en termes de rapports molaires, la composition suivante :

| | Intervalles avantageux | Intervalles préférés |
|---|---|---|
| $Si^{IV} : Al^{III}$ | 2 à 20 | 4 à 10 |
| $OH^- : Al^{III}$ | 2 à 12 | 3 à 10 |
| $ST : Al^{III}$ | 0,1 à 4 | 0,1 à 2 |
| $H_2O : Al^{III}$ | 40 à 200 | 50 à 150 |

Des exemples d'agents structurants répondant à la formule donnée précédemment sont tels que méthyléther d'éthylène glycol de formule $CH_3OCH_2CH_2OH$, diméthyléther d'éthylène glycol de formule $CH_3OCH_2CH_2OCH_3$, éthylène glycol de formule $HOCH_2CH_2OH$, propylène glycol de formule $HOCH_2CH_2CH_2OH$, méthyl éthers de polyéthylène glycols de formule $CH_3-O[CH_2CH_2O]_{n'}H$ et polyéthylène glycols de formule $OH[CH_2CH_2O]_{n'}H$ avec n' allant de 2 à 9 et notamment tétraéthylène glycol, pentaéthylène glycol, hexaéthylène glycol,, heptaéthylène glycol, octaéthylène glycol et mélanges de tels glycols, polypropylène qlycols

de formule $HO{\left[CH_2CH_2CH_2O\right]}_{n'}H$ avec n' allant de 2 à 9 et notamment tripropylène glycol, tétrapropylène glycol.

L'utilisation d'agents structurants selon l'invention conduit à l'obtention de zéolithes ayant la structure de symétrie cubique de la faujasite.

Parmi les sources de silicium tétravalent $Si^{IV}$ utilisables dans la préparation du mélange réactionnel, destiné à former le gel aluminosilicate, on peut citer les silices solides finement divisées sous forme d'hydrogels, d'aérogels ou de suspensions colloidales, les silicates hydrosolubles tels que les silicates alcalins comme le silicate de sodium, les esters siliciques hydrolysables tels que les orthosilicates de tétraalcoyles de formule $Si(OR)_4$ dans laquelle R désigne un alcoyle en $C_1$ à $C_4$ tel que méthyle et éthyle.

La source de silicium est mise en oeuvre sous la forme d'une solution aqueuse vraie, cas des silicates hydrosolubles, ou bien d'une suspension aqueuse qui peut être colloidale, cas des silices finement divisées.

Conviennent comme sources d'aluminium trivalent $Al^{III}$, les sels d'aluminium tels que sulfate, nitrate, chlorure, fluorure, acétate, les oxydes et hydroxyoxydes d'aluminium, les aluminates et notamment les aluminates alcalins tels que l'aluminate, de sodium, les esters d'aluminium tels que les aluminium trialcoxydes de formule Al $(OR)_3$ dans laquelle R désigne un radical alcoyle en $C_1$ à $C_4$ tel que méthyle, éthyle ou propyle.

La source d'ions hydroxydes est choisie parmi les bases fortes minérales, notamment hydroxydes des métaux alcalins du groupe IA de la Classification Périodique des Eléments et hydroxydes des métaux alcalino-terreux Ca, Sr et Ba, et les bases fortes organiques, notamment hydroxydes d'ammoniums quaternaires la préférence allant aux bases minérales notamment à la soude NaOH.

Le mélange réactionnel destiné à former le gel d'aluminosilicate peut encore renfermer des cations $M^{n+}$ d'au moins un métal M, de valence n, autre que les métaux dont les hydroxydes sont des bases fortes en quantité globale telle que le rapport molaire $M^{n+}$ : $Al^{aIII}$ soit au plus égal à 0,4 et de préférence au plus égal à 0,3. Lesdits cations $M^{n+}$ sont introduits dans ledit mélange réactionnel sous la forme de sels tels que sulfates, nitrates, chlorures ou acétates ou bien encore sous la forme d'oxydes.

Le mélange des ingrédients constituant le mélange réactionnel destiné à former le gel d'aluminosilicate peut être réalisé dans un ordre quelconque.

Avantageusement on effectue ledit mélange en préparant tout d'abord, à température ambiante, une solution aqueuse basique renfermant une base forte, l'agent structurant ST et les cations $M^{n+}$ s'ils sont utilisés, puis en incorporant à cette solution une solution aqueuse de la source de d'aluminium trivalent et une solution aqueuse ou une suspension, colloidale ou non, de la source de silicium tétravalent. Le pH du mélange réactionnel, dont la valeur est supérieure à 10, est de préférence proche de 13,5. Avant de procéder à la cristallisation du gel, on peut ajouter au milieu réactionnel destiné à former ledit gel, des germes de cristallisation en quantité allant avantageusement de 0,1% à 10% en poids du milieu réactionnel.

Les germes peuvent être produits par broyage d'une zéolithe de type faujasite, c'est-à-dire de même nature que la phase cristalline à produire. En l'absence d'ajout de germes, il est avantageux de soumettre le gel d'aluminosilicate, formé à partir du mélange réactionnel, à un murissement, dans une enceinte fermée, à une température inférieure à la température de cristallisation pendant une durée pouvant aller d'environ 6 heures à environ 6 jours. Ledit murissement peut être réalisé en statique ou sous agitation. La cristallisation du gel d'aluminosilicate, avec ou sans germe, s'effectue en chauffant le mélange réactionnel à une température au plus égale à 150°C et de préférence allant de 90°C à 120°C et sous une pression correspondant au moins à la pression autogène du mélange réactionnel formant le gel. La durée du chauffage nécessaire à la cristallisation dépend de la composition du gel et de la température de cristallisation. Elle se situe généralement entre 2 heures et 30 jours.

Les cristaux obtenus, désignés par précurseurs de la zéolithe et consistant en la zéolithe emprisonnant l'agent structurant et l'eau d'hydratation des cations dans ses pores et cavités, sont séparés du milieu de cristallisation par filtration, puis lavés à l'eau distillée ou désionisée jusqu'à obtenir des eaux de lavage peu basiques, c'est-à-dire dont le pH est inférieur à 9. Les cristaux lavés sont ensuite séchés en étuve à une température comprise entre 50°C et 100°C et de préférence vers 70°C.

La zéolithe est obtenue à partir des cristaux du précurseur en soumettant lesdits cristaux à une calcination, à une température supérieure à 300°C et de préférence comprise entre 400°C et 700°C pendant une durée suffisante pour éliminer l'agent structurant et l'eau d'hydratation des cations contenus dans le précurseur.

Comme indiqué précédemment, les zéolithes préparées par le procédé selon l'invention possèdent des rapports Si/Al supérieurs à 1 et pouvant dépasser 3 et présentent une structure de symétrie cubique du type de celle de la faujasite.

La caractérisation des produits selon l'invention, à savoir les précurseurs issus de la cristallisation et les zéolithes proprement dites résultant de la calcination des précurseurs, peut se faire en utilisant les techniques suivantes :

Microscopie électronique :

Au microscope électronique, les produits de structure cubique se présentent sous des formes compatibles avec la symétrie cubique (par exemple octaèdres réguliers).

Diagramme de diffraction des rayons X :

Ce diagramme de diffraction est obtenu au moyen d'un diffractomètre en utilisant la méthode classique des poudres avec le rayonnement $K_\alpha$ du cuivre.

Un étalon interne permet de déterminer précisement les valeurs des angles 2θ associés aux pics de diffraction. Les différentes distances interréticulaires ($d_{hkl}$) caractéristiques de l'échantillon, sont calculées à partir de la relation de BRAGG.

L'estimation de l'erreur de mesure $\Delta(d_{hkl})$ sur $d_{hkl}$ se calcule, en fonction de l'erreur absolue $\Delta(2\theta)$ affectée à la mesure de 2θ, par la relation de BRAGG.

En présence d'un étalon interne, cette erreur est minimisée et prise couramment égale à ± 0,05°. L'intensité relative I/Io affectée à chaque $d_{hkl}$ est estimée à partir de la hauteur du pic de diffraction correspondant. On utilise une échelle de symboles pour caractériser cette intensité relative comme suit :
FF=très forte, F=forte, mF=moyennement forte, m=moyenne mf=moyennement faible, f=faible, ff=très faible.

Thermogramme :

Les thermogrammes réalisés sur les échantillons de produits permettent de quantifier le nombre de molécules d'agent structurant et le nombre de molécules d'eau qui sont contenues dans une maille de la structure.

RMN du carbone 13 :

La RMN du carbone 13 en polarisation croisée avec rotation à l'angle magique réalisée sur des échantillons du précurseur permet de confirmer la présence de l'agent structurant dans les cavités du produit.

Détermination du rapport Si:Al

Elle peut être réalisée en faisant appel à l'une des techniques suivantes :
- analyse chimique
- RMN du Silicium 29

Les zéolithes selon l'invention de type faujasite ont une structure cubique présentant une valeur du paramètre a de la maille cubique comprise entre 2,4 et 2,5 nm, on peut donner à ces zéolithes cubiques la formule suivante ramenée à une maille (assemblage de 192 tétraèdres)

$$(v\ M_1^{q+})\ (w\ M^{n+})\ \left((SiO_2)_{192-x}\ (AlO_2)_x\right)^{x-},(zH_2O)$$

avec dans cette formule $M_1^{q+}$ désignant un cation q-valent d'un métal du groupe I A de la Classification Périodique des Eléments (q=1) ou d'un métal alcalino-terreux choisi parmi Ca, Sr et Ba (q=2) ou un cation monovalent renfermant de l'azote (q=1), notamment ammonium ou ammonium quaternaire, $M^{n+}$ représentant un cation métallique de valence n autre qu'un cation $M_1^{q+}$ ' x,z, w et v étant des nombres tels que $38 < x \leqq 96$ , $z \geqq O$ selon l'état d'hydratation de la zéolithe (z=O pour une zéolithe complètement anhydre),

$$O < v \leqq \frac{x}{q} \text{ et } O \leqq w \leqq \frac{x}{n} \text{ avec } qv + wn \geqq x$$

Le tableau I ci-après représente le diagramme de diffraction des rayons X caractéristique des zéolithes cubiques du type faujasite après calcination des produits à 500°C pendant 4 heures.

Dans la colonne des $d_{hkl}$ on a donné les valeurs moyennes des distances interréticulaires. Chacune de ces valeurs doit être affectée de l'erreur de mesure $\Delta(d_{hkl})$ comprise entre ± 0,1 et ± 0,004.

Les variations qui peuvent être observées par rapport à ces valeurs moyennes sont essentiellement liées à la nature des cations de compensation et au rapport Si/Al de la zéolithe. Les mêmes remarques s'appliquent aux intensités relatives I/Io.

TABLEAU I

| 2θ (degrés) | $d_{hkl}$ ($10^{-1}$ nm) | | I/Io |
|---|---|---|---|
| 6,19 | 14,27 | ± 0,2 | FF |
| 10,13 | 8,72 | | mF |
| 11,89 | 7,43 | | mF |
| 15,64 | 5,66 | ± 0,05 | F |
| 18,70 | 4,74 | | mF |
| 20,36 | 4,36 | | mF |
| 22,81 | 3,89 | | ff |
| 23,68 | 3,75 | | F |
| 25,84 | 3,44 | | ff |
| 27,07 | 3,292 | ± 0,008 | mF |
| 27,95 | 3,189 | | f |
| 29,69 | 3,007 | | f |
| 30,77 | 2,903 | | mf |
| 31,44 | 2,843 | | mF |

Les précurseurs de zéolithes qui sont produits lors de l'étape de cristallisation du procédé selon l'invention et dont la calcination conduit aux zéolithes dont les formules ont été définies plus haut, sont des aluminosilicates cristallins présentant un rapport Si:Al supérieur à 1 et pouvant dépasser 3, qui ont la structure cubique de la faujasite correspondant à un diagramme de diffraction des rayons X comparable à celui donné dans le tableau II et qui possèdent des cavités emprisonnant des molécules de structurant ST, qui sont choisies parmi les polyoxydes d'alcoylène dont la formule a été définie précédemment.

TABLEAU II

| 2 θ (degrés) | $d_{hkl}$ ($10^{-1}$ nm) | I/Io |
|---|---|---|
| 6,24 | 14,13 ± 0,2 | FF |
| 10,16 | 8,69 | mF |
| 11,93 | 7,41 | mF |
| 15,70 | 5,64 ± 0,05 | F |
| 18,75 | 4,72 | mF |
| 20,39 | 4,35 | mF |
| 22,84 | 3,89 | f |
| 23,69 | 3,75 | F |
| 25,05 | 3,55 | f |
| 25,94 | 3,43 | f |
| 27,11 | 3,286 ± 0,008 | F |
| 27,85 | 3,200 | ff |
| 29,68 | 3,007 | f |
| 30,77 | 2,903 | mf |

Les zéolithes obtenues par le procédé selon l'invention sont utilisables dans les mêmes types d'application que les zéolithes de structure similaire et de rapport Si : Al comparable ou inférieur préparées par des méthodes voisines ou différentes.

Ainsi les zéolithes obtenues selon l'invention conviennent comme adsorbant pour effectuer l'adsorption sélective de molécules dont les dimensions sont inférieures à 0,8 nm ou encore, après avoir été soumises à des réactions d'échange avec des cations divers, comme catalyseurs ou composantes de catalyseurs utilisables dans les réactions de conversion catalytique de composés organiques et notamment de composés hydrocarbonés. Par exemple, par traitement d'échange avec des cations ammonium suivi d'une calcination on obtient la forme protonée de la zéolithe. Cette forme ainsi que celles résultant d'un traitement d'échange avec des cations des terres rares comme le lanthane sont appropriées comme catalyseurs acides pour l'hydrocraquage des charges pétrolières. Les zéolithes peuvent être également soumises à des traitements d'échange avec des cations de métaux des groupes II à VIII de la Classification Périodique pour former des produits appropriés comme catalyseurs de conversion des hydrocarbures. Pour leurs applications en tant que catalyseurs, les zéolithes modifiées par échange avec des cations leur conférant des propriétés catalytiques peuvent être utilisées seules ou sous la forme de produits composites résultant du mélange de ces zéolithes modifiées avec d'autres produits catalytiquement actifs et/ou avec une matrice amorphe telle qu'un gel de silice ou encore un gel mixte de silice et d'un autre oxyde tel que magnésie, alumine, oxyde de titane, oxyde de zirconium, ladite matrice servant à conférer, entre autres, une meilleure stabilité thermique au catalyseur.

Les catalyseurs composites associant une ou plusieurs zéolithes catalytiquement actives à une matrice à base de gel de silice ou de gel mixte de silice et d'un autre oxyde sont particulièrement appropriés pour les opérations en lit mobile ou en lit fluidisé car ils peuvent être façonnés aisément, par exemple par séchage par pulvérisation d'une suspension aqueuse des ingrédients les composant, en grains ayant les dimensions requises pour ces opérations.

Les exemples suivants sont donnés à titre non limitatif pour illustrer l'invention.

Dans ces exemples, les quantités et pourcentages sont donnés en poids sauf indication contraire.

EXEMPLE 1 :

On préparait tout d'abord un gel aluminosilicate en opérant comme suit dans un récipient de capacité appropriée, le contenu dudit récipient étant maintenu sous agitation pendant toute la durée de l'opération.

Dans le récipient on introduisait 9 parties d'eau, 0,58 partie de soude NaOH et, après dissolution de la soude, 1,92 partie d'agent structurant consistant en l'éther méthylique d'un polyoxyéthylène glycol de masse moléculaire moyenne en nombre $\overline{M}n$ égale à 350. Après dissolution totale, on ajoutait alors au contenu du récipient 1 partie d'aluminate de sodium renfermant 56 % d'$Al_2O_3$ et 37 % de $Na_2O$ et chauffait légèrement le mélange réactionnel pour dissoudre complètement l'aluminate.

Après retour à température ambiante, on introduisait alors dans le récipient 8,2 parties d'une suspension colloïdale de silice renfermant 40% de $SiO_2$ et 60% d'eau.

On obtenait ainsi un gel d'aluminosilicate dont la composition molaire, rapportée à une mole d'$Al_2O_3$ était la suivante :

$$10\ SiO_2;\ 1\ Al_2O_3;\ 2{,}4\ Na_2O;\ 1\ \text{"}POE_{350}\text{"};\ 140\ H_2O$$

L'abréviation "$POE_{350}$" désigne l'agent structurant utilisé.

Le gel obtenu était soumis à un murissement à température ambiante pendant 48 heures dans un récipient fermé. Le gel muri était ensuite placé dans un autoclave et maintenu à 110°C dans ce dernier pendant 20 jours pour former un produit cristallisé. Les cristaux obtenus étaient séparés du milieu réactionnel par filtration, puis lavés à l'eau distillée jusqu'à faible basicité (pH inférieur à 9) des eaux de lavage et enfin séchés à environ 60°C dans une étuve.

Les cristaux séchés étaient ensuite calcinés à 500°C pendant 4 heures afin d'éliminer les molécules de l'agent structurant utilisé et d'obtenir la zéolithe.

Avant calcination, le produit cristallisé présente un diagramme de diffraction des rayons X comparable à celui donné dans le tableau II, ledit produit présentant en outre un rapport Si : Al égal à 3,8 et renfermant dans ses micropores de molécules d'eau et des molécules d'agent structurant. Les espèces occluses dans les micropores de la zéolithe (eau et agent structurant) représentent 24,7 % du précurseur zéolithique.

La zéolithe formée par calcination du produit cristallisé ci-dessus présente un diagramme de diffraction des rayons X comparable à celui donné dans le tableau I.

La formule trouvée pour cette zéolithe, ramenée à une maille cubique de 192 tétraèdres, s'écrit à l'état anhydre

$$41{,}5\ Na^{+}\left[(SiO_2)_{151{,}8}\ (AlO_2)_{40{,}2}\right]^{40{,}2-}$$

EXEMPLE 2 :

On opérait comme indiqué dans l'exemple 1 avec toutefois les variations suivantes des conditions opératoires

. préparation du gel : 0,49 partie de soude et 3,84 parties d'agent structurant (même produit que dans l'exemple 1)
. murissement : 24 heures à 25°C
. cristallisation : 20 jours à 110°C

Le gel aluminosilicate, avant murissement, avait la composition molaire suivante rapportée à 1 mole d'$Al_2O_3$ :

$$10\ SiO_2;\ 1\ Al_2O_3;\ 2{,}2\ Na_2O;\ 2\ \text{"}POE_{350}\text{"}\ ;\ 140\ H_2O$$

Avant calcination, le produit cristallisé présente un diagramme de diffraction des rayons X comparable à celui donné dans le tableau II.

Ledit produit présente un rapport Si : Al égal à 4,1 et renferme dans ses micropores des molécules d'eau et des molécules de l'agent structurant utilisé. Les espèces occluses dans les micropores de la zéolithe avant calcination (eau et agent structurant) représentent 25,4 % du précurseur zéolithique.

La zéolithe formée par calcination du produit précurseur cristallisé présente un diagramme de diffraction des rayons X comparable à celui donné dans le tableauI.

La formule trouvée pour cette zéolithe, ramenée à une maille cubique de 192 tétraèdres, s'écrit à l'état anhydre

$$40{,}2\ Na^{+}\left[(SiO_2)_{153{,}6}\quad(AlO_2)_{38{,}4}\right]^{38{,}4-}$$

EXEMPLE 3 :

On opérait comme indiqué dans l'exemple 1 avec toutefois les variations suivantes des conditions opératoires

. préparation du gel : 1,1 partie d'agent structurant consistant en l'éther monométhylique d'un polyéthylèneglycol de masse moléculaire Mn égal à 200.
. murissement : 24 heures à 20°C
. cristallisation : 12 jours à 100°C

Avant murissement, le gel aluminosilicate avait la composition molaire suivante rapportée à 1 mole d'$Al_2O_3$:

$$10\ SiO_2\ ;\ 1\ Al_2O_3\ ;\ 2{,}4\ Na_2O\ ;\ 1\ \text{"}POE_{200}\text{"}\ 140\ H_2O$$

L'abréviation "$POE_{200}$" désigne l'agent structurant utilisé.

Avant calcination, le produit cristallisé présente un diagramme de diffraction des rayons X comparable à celui donné dans le tableau II.

Ce produit présente en outre un rapport Si : Al de 3,6 et renferme dans ses micropores des molécules d'eau et des molécules de l'agent structurant utilisé. Les espèces occluses dans les micropores de la zéolithe ($H_2O$ et agent structurant) représentent 25,7 % du précurseur zéolithique.

La zéolithes formée par calcination du produit précurseur ci-dessus présente un diagramme de diffraction des rayons X comparable à celui du tableau I.

La formule trouvée pour cette zéolithe, ramenée à une maille cubique de 192 tétraèdres, s'écrit à l'état anhydre :

$$43{,}8\ Na^{+}\left[(SiO_2)_{150{,}3}\quad(AlO_2)_{41{,}7}\right]^{41{,}7-}$$

EXEMPLE 4 :

On opérait comme indiqué dans l'exemple 1 avec toutefois les variations suivantes des conditions opératoires

. préparation du gel : 3,3 parties d'agent structurant consistant en l'éther monométhylique d'un polyéthylèneglycol de masse moléculaire égale à 300 et 0,53 partie de soude

. murissement : 24 heures à 30°C

. cristallisation : 20 jours à 110°C

Avant murissement, le gel d'aluminosilicate avait la composition molaire suivante rapportée à 1 mole d'$Al_2O_3$ :

$$10\ SiO_2;\ 2{,}3\ Na_2O\ ;\ 1\ Al_2O_3\ ;\ 2\ \text{"}POE_{300}\text{"}\ ;\ 140\ H_2O$$

Avant calcination, le produit cristallisé présente un diagramme de diffraction des rayons X comparable à celui tableau II. Ledit produit présente en outre un rapport Si:Al égal à 3,8 et contient dans ses micropores des molécules d'eau et des molécules de l'agent structurant utilisé. Les espèces occluses dans les micropores de la zéolithe ($H_2O$ et agent structurant représentent 24,5 % du précurseur zéolithique.

La zéolithe formée par calcination du produit précurseur ci-dessus présente un diagramme de diffraction des rayons X comparable à celui du tableau I.

La formule trouvée pour cette zéolithe, ramenée à une maille cubique de 192 tétraèdres, s'écrit à l'état anhydre :

$$42{,}5\ Na^{+}\left[(SiO_2)_{151{,}9}\ (AlO_2)_{40{,}1}\right]^{40{,}1^{-}}$$

## Revendications

1. Procédé de préparation de zéolithes à charpente aluminosilicate appartenant à la famille structurale de la faujasite et présentant un rapport Si:Al supérieur à 1 et pouvant dépasser 3, ledit procédé étant du type dans lequel on réalise tout d'abord un mélange réactionnel ayant un pH supérieur à 10 et renfermant de l'eau, une source de silicium tétravalent, une source d'aluminium trivalent, une source d'ions hydroxydes sous la forme d'une base forte et un agent structurant ST de manière à produire un gel aluminosilicate ayant la composition voulue pour permettre sa cristallisation en un composé de la famille structurale de la faujasite, puis on maintient le gel obtenu à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire ledit agent structurant et produire la zéolithe, et se caractérisant en ce que l'agent structurant ST consiste en au moins un composé choisi parmi les polyoxydes d'alcoylène répondant à la formule

$$R - O\!\left[C_mH_{2m-1}\ X - O\right]_n\!-R'$$

dans laquelle R et R', identiques ou différents, représentent chacun un atome d'hydrogène ou un radical alcoyle en $C_1$ à $C_4$, X désigne un atome d'hydrogène ou un radical -OH, m est égal à 2 ou 3 et peut être différent d'un motif à l'autre et n est un nombre allant de 1 à 12.

2. Procédé selon la revendication 1, caractérisé en ce que la quantité d'agent structurant ST dans le mélange réactionnel destiné à former le gel est telle que le rapport molaire $ST:Al^{III}$ aille de 0,1 à 4 et de préférence de 0,1 à 2.

3. Procédé selon la revendication 1 ou 2, caractérisé en ce que les ingrédients constituant le mélange réactionnel donnant naissance au gel aluminosilicate sont utilisés en quantités telles que ledit gel ait, en termes de rapports molaires, une composition telle que $Si^{IV} : Al^{III}$ = 2 à 20, $OH^- : Al^{III}$ = 2 à 12, $ST : Al^{III}$ = 0,1 à 4 et $H_2O : Al^{III}$ = 40 à 200.

4. Procédé selon la revendication 3, caractérisé en ce que ladite composition est telle que $Si^{IV} : Al^{III}$ = 4 à 10, $OH^- : Al^{III}$ = 3 à 10, $ST:Al^{III}$ = 0,1 à 2 et $H_2O: Al^{III}$ = 50 à 150.

5. Procédé selon l'une des revendications 1 à 4, caractérisé en ce que l'agent structurant ST consiste en

au moins un composé choisi dans le groupe formé par $CH_3OCH_2CH_2OH$, $CH_3OCH_2CH_2OCH_3$, $HOCH_2CH_2OH$, $HOCH_2CH_2CH_2OH$, $CH_3\text{-}O\text{-}(CH_2CH_2O)_{n'}H$, $HO\text{-}(CH_2CH_2O)_{n'}H$ et $HO\text{-}(CH_2CH_2CH_2O)_{n'}H$ avec n' représentant un nombre allant de 2 à 9.

6. Procédé selon l'une des revendications 1 à 5, caractérisé en ce que la source de silicium tétravalent est choisie dans le groupe constitué par les silices finement divisées sous la forme d'hydrogels, d'aérogels ou de suspensions colloïdales, les silicates hydrosolubles tels que les silicates alcalins comme le silicate de sodium, et les esters siliciques hydrolysables tels que les orthosilicates de tétraalcoyles de formule $Si(OR)_4$ dans laquelle R désigne un radical alcoyle en $C_1$ à $C_4$.

7. Procédé selon l'une des revendications 1 à 6, caractérisé en ce que la source d'aluminium trivalent est choisie dans le groupe constitué par les sels d'aluminium, les oxydes et hydroxyoxydes d'aluminium, les aluminates et notamment les aluminates alcalins tels que l'aluminate de sodium, et les esters d'aluminium tels que les aluminium trialcoxydes de formule $Al\,(OR)_3$ dans laquelle R est un radical alcoyle en $C_1$ à $C_4$.

8. Procédé selon l'une des revendications 1 à 7, caractérisé en ce que la source d'ions hydroxydes est choisie dans le groupe formé par les hydroxydes des métaux alcalins du groupe IA de la Classification Périodique des Eléments, les hydroxydes des métaux alcalinoterreux Ca, Sr et Ba et les bases fortes organiques.

9. Procédé selon l'une des revendications 1 à 8, caractérisé en ce que le mélange réactionnel renferme des cations $M^{n+}$ d'au moins un métal M, de valence n, autre que les métaux dont les hydroxydes sont des bases fortes, en quantité globale telle que le rapport molaire $N^{n+}$ : $Al^{III}$ dans ledit mélange soit au plus égal à 0,4 et de préférence au plus égal à 0,3.

10. Procédé selon l'une des revendications 1 à 9, caractérisé en ce qu'avant de procéder à la cristallisation du gel, on ajoute au milieu réactionnel destiné à former ledit gel des germes de cristallisation en quantité allant de 0,1% à 10% en poids dudit milieu réactionnel, lesdits germes de cristallisation étant notamment produits par broyage d'une zéolithe de même nature que la phase cristalline à produire.

11. Procédé selon l'une des revendications 1 à 10, caractérisé en ce qu'avant de procéder à la cristallisation du gel, on soumet ledit gel à un murissement, dans une enceinte fermée, à une température inférieure à la température de cristallisation pendant une durée allant d'environ 6 heures à environ 6 jours.

12. Procédé selon l'une des revendications 1 à 11, caractérisé en ce que la cristallisation du gel aluminosilicate, avec ou sans germe, est réalisée en maintenant ledit gel à une température allant de 90°C à 120°C pendant une durée comprise entre 2 heures et 30 jours.

13. Procédé selon l'une des revendications 1 à 12, caractérisé en ce que la calcination du précurseur de la zéolithe est réalisée à une température supérieure à 300°C et de préférence comprise entre 400°C et 700°C.

14. Précurseurs de zéolithes à charpente aluminosilicate appartenant à la famille structurale de la faujasite consistant en aluminosilicates ayant un rapport Si:Al supérieur à 1 et pouvant dépasser 3 et qui, d'une part, présentent une structure de symétrie cubique comparable à celle de la faujasite et d'autre part, possèdent des cavités ou des canaux emprisonnant des molécules d'au moins un agent structurant ST, caractérisés en ce que l'agent structurant appartient au groupe formé par les polyoxydes d'alcoylène répondant à la formule

$$R - O \left[ C_mH_{2m-1}X - O \right]_n R'$$

dans laquelle R et R', identiques ou différents, représentent chacun un atome d'hydrogène ou un radical alcoyle en $C_1$ à $C_4$, X désigne un atome d'hydrogène ou un radical hydroxyle, m est égal à 2 ou 3 et peut être différent d'un motif à l'autre et n est un nombre allant de 1 à 12.

15. Précurseurs selon la revendication 14, caractérisés en ce que l'agent structurant ST est choisi dans le groupe formé par $CH_3OCH_2CH_2OCH_3$, $CH_3OCH_2CH_2OH$, $HOCH_2CH_2OH$, $HOCH_2CH_2CH_2OH$, $CH_3\text{-}O($

$CH_2CH_2O-)_{n'}-H$, $HO-(CH_2CH_2O-)_{n'}-H$ et $HO-(CH_2CH_2CH_2O-)_{n'}-H$ avec n' représentant un nombre allant de 2 à 9.

**16.** Précurseurs selon la revendication 14 ou 15, caractérisés en ce qu'ils présentent un diagramme de diffraction des rayons X comparable à celui qui est défini dans le tableau II de la description.

**17.** Application des précurseurs selon l'une des revendications 14 à 16 à la production, par calcination desdits précurseurs, de zéolithes à charpente aluminosilicate appartenant à famille structurale de la faujasite et présentant un rapport Si:Al supérieur à 1 et pouvant dépasser 3, et, d'autre part, une structure de symétrie cubique comparable à celle de la faujasite, lesdites zéolithes étant notamment utilisables, directement ou après échange de cations, comme adsorbants ou comme composants de catalyseurs.

**18.** Application selon la revendication 17, caractérisée en ce que les zéolithes obtenues par calcination des précurseurs présentent une valeur du paramètre a de la maille cubique comprise entre 2,4 et 2,5 nm, ont un diagramme de diffraction des rayons X comparable à celui donné dans le tableau I de la description et répondent à une formule qui, ramenée à une maille de la structure cubique, s'écrit

$$(v\,M_1^{q+})\ (w\,M^{n+})\ \left[(SiO_2)_{192-x}\ (AlO_2)_x\right]^{x-}\ (z\,H_2O)$$

et dans laquelle $M_1^{q+}$ désigne un cation q-valent d'un métal du groupe IA de la Classification Périodique des Eléments (q=1) ou d'un métal alcalinoterreux choisi parmi Ca, Sr et Ba (q=2) ou un cations monovalent azoté (q=1), $M^{n+}$ représente un cation d'au moins un métal M de valence n autre qu'un cation $M_1^{q+}$ et x, z, v et w sont des nombres tels que $38 < x \leqq 96$, $z \geqq O$ et dépendant de l'état d'hydratation du précurseur, $O < v \leqq \frac{x}{q}$ et $O \leqq w \leqq \frac{x}{n}$ avec $qv+wn \geqq x$.

## Patentansprüche

**1.** Verfahren zur Herstellung von Zeolithen mit Alumosilikatstruktur aus der Strukturfamilie der Faujasite mit einem Verhältnis Si:Al größer als 1, wobei 3 überschritten werden kann, bei dem zunächst ein Reaktionsgemisch mit einem pH von mehr als 10 gebildet wird, das Wasser, eine Quelle für vierwertiges Silizium, eine Quelle für dreiwertiges Aluminium sowie eine Hydroxidionenquelle in Form einer starken Base und ein strukturierendes Medium ST enthält, zur Herstellung eines Alumosilikatgels der gewünschten Zusammensetzung, die seine Kristallisation zu einer Verbindung der Strukturfamilie der Faujasite erlaubt, bei dem dann das erhaltene Gel bei einer Temperatur von höchstens 150°C und unter einem Druck, der mindestens dem Eigendruck des durch das Gel gebildeten Gemisches entspricht, in einer Zeitspanne, die für die Kristallisation dieses Gels in einem Vorläufer des Zeoliths, bestehend aus dem in seinen Hohlräumen das Strukturierungsmittel ST enthaltenden Zeolith, ausreichend ist, gehalten wird, wobei der Vorläufer einer Kalzinierung unterworfen wird, um das Strukturierungsmittel zu zerstören und das Zeolith herzustellen, dadurch gekennzeichnet, daß das Strukturierungsmittel ST aus wenigstens einer Verbindung ausgewählt aus den Alkylenpolyoxiden gemäß der Formel

$$R - O - \left[C_mH_{2m-1}X - O\right]_n - R'$$

besteht,
worin R und R' identisch oder verschieden sind und ein Wasserstoffatom oder einen $C_1$-$C_4$-Alkylrest darstellen, X ein Wasserstoffatom oder einen OH-Rest bezeichnet, m gleich 2 oder 3 ist und von einem Strukturelement zum anderen verschieden sein kann, und n eine Zahl zwischen 1 und 12 ist.

**2.** Verfahren nach Anspruch 1, dadurch gekennzeichnet, daß die Menge des Strukturierungsmittels ST in dem zur Bildung des Gels bestimmten Reaktionsgemisch so gehalten ist, daß das Molverhältnis $ST:Al^{III}$ 0,1 bis 4, vorzugsweise 0,1 bis 2, ist.

3. Verfahren nach Anspruch 1 oder 2, dadurch gekennzeichnet, daß die das Reaktionsgemisch bildenden Bestandteile zur Bildung des Alumosilikatgels in solchen Mengen verwendet werden, daß das Gel in bezug auf die Molverhältnisse eine Zusammensetzung wie z.B. $Si^{IV} : Al^{III} = 2$ bis 20, $OH^- : Al^{III} = 2$ bis 12, $ST : Al^{III} = 0{,}1$ bis 4 und $H_2O : Al^{III} = 40$ bis 200 hat.

4. Verfahren nach Anspruch 3, dadurch gekennzeichnet, daß die Zusammensetzung folgendermaßen ist: $Si^{IV} : Al^{III} = 4$ bis 10, $OH^- : Al^{III} = 3$ bis 10, $ST:Al^{III} = 0{,}1$ bis 2 und $H_2O:Al^{III} = 50$ bis 150.

5. Verfahren nach einem der Ansprüche 1 bis 4, dadurch gekennzeichnet, daß das Strukturierungsmittel ST wenigstens aus einer Verbindung, ausgewählt aus der Gruppe $CH_3OCH_2CH_2OH$, $CH_3OCH_2CH_2OCH_3$, $HOCH_2CH_2OH$, $HOCH_2CH_2CH_2OH$, $CH_3\text{-}O\text{-}(CH_2CH_2O)_{n}H$, $HO\text{-}(CH_2CH_2O)_{n'}H$ und $HO\text{-}(CH_2CH_2CH_2O)_{n'}H$ besteht, wobei n' eine Zahl zwischen 2 und 9 ist.

6. Verfahren nach einem der Ansprüche 1 bis 5, dadurch gekennzeichnet, daß die Quelle für vierwertiges Silizium ausgewählt ist aus der Gruppe der fein geteilten Siliziumdioxide in Form von Hydrogelen, Aerogelen oder Kolloidsuspensionen, der wasserlöslichen Silikate, z.B. alkalische Silikate wie Natriumsilikat, und der hydrolisierbaren Siliziumester wie Tetraalkylorthosilikate der Formel $Si(OR)_4$, wobei R einen $C_1$-$C_4$-Alkylrest darstellt.

7. Verfahren nach einem der Ansprüche 1 bis 6, dadurch gekennzeichnet, daß die Quelle für dreiwertiges Aluminium ausgewählt ist aus der Gruppe der Aluminiumsalze, der Aluminiumoxide und -hydroxyoxide, der Aluminate und insbesondere der alkalischen Aluminate wie Natriumaluminate, und der Aluminiumester wie Aluminiumtrialkoxide der Formel $Al\ (OR)_3$, wobei R einen $C_1$-$C_4$-Alkylrest darstellt.

8. Verfahren nach einem der Ansprüche 1 bis 7, dadurch gekennzeichnet, daß die Hydroxidionenquelle ausgewählt ist aus der Gruppe der Hydroxide der alkalischen Metalle der Gruppe IA der Periodentafel der Elemente, der Hydroxide der Erdalkalimetalle Ca, Sr und Ba und der starken organischen Basen.

9. Verfahren nach einem der Ansprüche 1 bis 8, dadurch gekennzeichnet, daß das Reaktionsgemisch die Kationen $M^{n+}$ von wenigstens einem Metall M, mit einer Wertigkeit n, umfaßt, anders als die Metalle, deren Hydroxide starke Basen sind, in einer Gesamtmenge, so daß das Molverhältnis $M^{n+} : Al^{III}$ in dem Gemisch höchstens 0,4, vorzugsweise höchstens 0,3, beträgt.

10. Verfahren nach einem der Ansprüche 1 bis 9, dadurch gekennzeichnet, daß man vor der Kristallisation des Gels dem zur Bildung des Gels bestimmten Reaktionsmedium Kristallisationskeime in einer Menge von 0,1 bis 10 Gew.-% des Reaktionsmediums zugibt, wobei die Kristallisationskeime insbesondere pulverförmiges Zeolith der gleichen Art wie die herzustellende kristalline Phase sind.

11. Verfahren nach einem der Ansprüche 1 bis 10, dadurch gekennzeichnet, daß man das Gel vor der Kristallisation in einem geschlossenen Behälter bei einer Temperatur, die niedriger als die Kristallisationstemperatur ist, während einer Zeitspanne von ungefähr 6 Stunden bis ungefähr 6 Tagen einer Reifung unterwirft.

12. Verfahren nach einem der Ansprüche 1 bis 11, dadurch gekennzeichnet, daß die Kristallisation des Alumosilikatgels, mit oder ohne Keim, erfolgt, indem man das Gel während einer Zeitspanne von 2 Stunden bis 30 Tagen auf einer Temperatur zwischen 90°C und 120°C hält.

13. Verfahren nach einem der Ansprüche 1 bis 12, dadurch gekennzeichnet, daß die Kalzinierung des Zeolithvorläufers bei einer Temperatur von höher als 300°C erfolgt, vorzugsweise zwischen 400°C und 700°C.

14. Zeolithvorläufer mit Alumosilikatstruktur aus der Strukturfamilie der Faujasite bestehend aus Alumosilikaten mit einem Verhältnis Si:Al höher als 1, wobei 3 überschritten werden kann, die zum einen eine würfelförmige Struktur darstellen, die vergleichbar ist mit der des Faujasits, und zum anderen die Moleküle von wenigstens einem Strukturierungsmittel ST einschließenden Hohlräume oder Kanäle aufweisen, dadurch gekennzeichnet, daß das Strukturierungsmittel zur Gruppe der Alkylenpolyoxide gemäß der Formel

$$R - O - [C_mH_{2m-1}X - O]_n - R'$$

gehört, wobei R und R' identisch oder verschieden sind und ein Wasserstoffatom oder einen $C_1$-$C_4$-Alkylrest darstellen, X ein Wasserstoffatom oder einen Hydroxylrest bezeichnet, m gleich 2 oder 3 ist und von einem Strukturelement zum anderen verschieden sein kann, und n eine Zahl zwischen 1 und 12 ist.

**15.** Vorläufer nach Anspruch 14, dadurch gekennzeichnet, daß das Strukturierungsmittel ST ausgewählt ist aus der Gruppe $CH_3OCH_2CH_2OCH_3$ , $CH_3OCH_2CH_2OH$, $HOCH_2CH_2OH$, $HOCH_2CH_2CH_2OH$, $CH_3\text{-}O\!\left(CH_2CH_2O\right)_{n'}\!-H$, $HO\!\left(CH_2CH_2O\right)_{n'}\!-H$ sowie $HO\!\left(CH_2CH_2CH_2O\right)_{n'}\!-H$, wobei n' eine Zahl zwischen 2 und 9 darstellt.

**16.** Vorläufer nach Anspruch 14 oder 15, dadurch gekennzeichnet, daß sie ein Röntgendiffraktionsdiagramm, das vergleichbar ist mit dem in Tabelle II der Beschreibung, darstellen.

**17.** Verwendung von Vorläufern nach einem der Ansprüche 14 bis 16 bei der Herstellung, durch Kalzinierung der Vorläufer, von Zeolithen mit Alumosilikatstruktur aus der Strukturfamilie der Faujasite mit einem Verhältnis Si:Al größer als 1, wobei 3 überschritten werden kann, oder einer würfelförmigen Struktur, die vergleichbar ist mit dem Faujasit, wobei die Zeolithe insbesondere direkt oder nach dem Kationenaustausch als Adsorbens oder katalytische Komponente verwendbar sind.

**18.** Verwendung nach Anspruch 17, dadurch gekennzeichnet, daß die durch die Kalzinierung der Vorläufer erhaltenen Zeolithe einen Parameterwert a mit einer Würfelgröße zwischen 2,4 und 2,5 nm darstellen, ein Röntgendiffraktionsdiagramm haben, das vergleichbar ist mit dem in Tabelle I der Beschreibung, und einer auf die Größe der Würfelstruktur zurückgeführten Formel entspricht, die wie folgt aussieht:

$$(v\ M_1^{q+})\quad (w\ M^{n+})\quad \left[(SiO_2)_{192-x}\quad (AlO_2)_x\right]^{x-}\quad (z\ H_2O)$$

worin $M_1^{q+}$ ein q-wertiges Kation eines Metalles der Gruppe IA der Periodentafel der Elemente (q=1) oder eines Erdalkalimetals ausgewählt aus Ca, Sr und Ba (q=2), oder ein einwertiges Stickstoffatom (q=1) bezeichnet, und $M^{n+}$ ein Kation von wenigstens einem Metall M mit einer Wertigkeit n, anders als ein Kation $M_1^{q+}$ darstellt, wobei x, z, v und w Zahlen wie $38 < x \leqq 96$, $z \geqq O$, und abhängig vom Hydrationszustand des Vorläufers, $O < v \leqq \frac{x}{q}$ und $O \leqq w \leqq \frac{x}{q}$ mit $qv+wn \geqq x$ sind.

## Claims

**1.** Process for preparing zeolites with an aluminosilicate structure belonging to the faujasite structural family and having an Si:Al ratio that is greater than 1 and may exceed 3, the said process being of the type in which there is first produced a reactive mixture having a pH greater than 10 and containing water, a source of tetravalent silicons, a source of trivalent aluminium, a source of hydroxide ions in the form of a strong base and a structuring agent ST,

as to produce an aluminosilicate gel having the desired composition to allow its crystallisation into a composite of the faujasite structural family, the gel obtained is then maintained at a temperature of at least 150°C and under a pressure at least equal to the autogenous pressure of the mixture constituted by the said gel for a duration sufficient to effect the crystallisation of this gel into a precursor of zeolite consisting of the zeolite trapping the structuring agent ST in its cavities and the said precursor is subjected to a calcination to destroy the said structuring agent and produce the zeolites, and characterised in that the structuring agent ST consists of at least one composition selected from among polyalkyleneoxides

corresponding to the formula

$$R - O\!\left[C_mH_{2m-1}X - O\right]_n\!-R'$$

in which R and R', which may be identical or different, each represent a hydrogen atom or a $C_1$ to $C_4$ radical alkyl, X designates a hydrogen atom or an -OH radical, n is 2 or 3 and may be different from one motif to another and n is a number from 1 to 12.

2. Process according to Claim 1, characterised in that the quantity of structuring agent ST in the reactive mixture intended to form the gel is such that the molar ratio ST:$Al^{III}$ is from 0.1 to 4 and preferably from 0.1 to 2.

3. Process according to Claim 1 or Claim 2, characterised in that the ingredients constituting the reactive mixture producing the aluminosilicate gel are used in quantities such that the said gel has, in terms of molar ratios, a composition such as $Si^{IV}$: $Al^{III}$ = 2 to 20, $OH^-$:$Al^{III}$ = 2 to 12, ST: $Al^{III}$ = 0.1 to 4 and $H_2O$: $Al^{III}$ = 40 to 200.

4. Process according to Claim 3, characterised in that the said composition is such as $Si^{IV}$: $Al^{III}$ = 4 to 10, $OH^-$: $Al^{III}$ = 3 to 10, ST:$Al^{III}$ = 0.1 to 2 and $H_2O$:$Al^{III}$ = 50 to 150.

5. Process according to any one of Claims 1 to 4, characterised in that the structuring agent ST consists of at least one compound selected from the group formed by $CH_3OCH_2CH_2OH$, $CH_3OCH_2CH_2OCH_3$, $HOCH_2CH_2OH$, $HOCH_2CH_2CH_2OH$, $CH_3$-O-$(CH_2CH_2O)_{n'}$H, HO-$(CH_2CH_2O)_{n'}$H HO-$(CH_2CH_2CH_2O)_{n'}$H where n' represents a number from 2 to 9.

6. Process according to any one of Claims 1 to 5, characterised in that the source of tetravalent silicon is selected from among the group consisting of finely divided silicas in the form of hydrogels, aerogels or colloidal suspensions, hydrosoluble silicates such as alkaline silicates such as sodium silicate, and hydrolysable salicylic esters such as tetraalcoylorthosilicates of the formula $Si(OR)_4$ in which R designates a $C_1$ to $C_4$ radical alkyl.

7. Process according to any one of Claims 1 to 6, characterised in that the source of trivalent aluminium is selected from among the group consisting of aluminium salts, aluminium oxides and hydroxides, aluminates, and in particular alkaline aluminates such as sodium aluminate, and aluminium esters such as aluminium trialcoxides of the formula Al $(OR)_3$ in which R is a $C_1$ to $C_4$ alkyl radical.

8. Process according to any one of Claims 1 to 7, characterised in that the source of hydroxide ions is selected from among the group formed by alkaline metal hydroxides of the IA group of the Periodic Table of Elements, alkaline earth metal hydroxides, Ca, Sr and Ba, and the strong organic bases.

9. Process according to any one of Claims 1 to 8, characterised in that the reactive mixture contains cations $M^{n+}$ of at least one metal M, of the valency n, different from the metals, the hydroxides of which are strong bases, in a total quantity such that the molar ratio $M^{n+}$:$Al^{III}$ in the said mixture is at most 0.4 and preferably at most 0.3.

10. Process according to any one of Claims 1 to 9, characterised in that before the gel is crystallised, there is added to the reactive mixture intended to form the said gel, crystallisation nuclei in a quantity of from 0.1% to 10% by weight of the said reactive mixture, the said crystallisation nuclei being produced in particular by crushing a zeolite of the same nature as the crystalline phase to be produced.

11. Process according to any one of Claims 1 to 10, characterised in that before the crystallisation of the gel, the said gel is subjected to ageing in a closed container at a temperature that is lower than the crystallisation temperature for a duration of from approximately 6 hours to approximately 6 days.

12. Process according to any one of Claims 1 to 11, characterised in that the crystallisation of the aluminosilicate gel, with or without nuclei, is performed by keeping the said gel at a temperature of from 90°C to 120°C for a duration of between 2 hours and 30 days.

13. Process according to any one of Claims 1 to 12, characterised in that the calcination of the precursor of the zeolite is performed at a temperature that is greater than 300°C and preferably between 400°C and 700°C.

14. Precursors of zeolites with an aminosilicate structure belonging to the faujasite structural family, consisting of aminosilicates having an Si:Al ratio which is greater than 1 and may exceed 3 and which, on the one hand, has a symmetrical cubic structure comparable to that of faujasite and on the other hand have cavities or channels trapping molecules of at least one structuring agent ST, characterised in that the structuring agent belongs to the group consisting of polyalkyleneoxides corresponding to the formula

$$R - O\left[C_mH_{2m-1}X - O\right]_n R'$$

in which R and R', which are identical or different, each represent a hydrogen atom or a $C_1$ to $C_4$ alkyl radical, X designates hydrogen atom or a hydroxyl radical, m is 2 or 3 and may be different from one motif to another and n is a number from 1 to 12.

**15.** Precursors according to Claim 14, characterised in that the structuring agent ST is selected from among the group consisting of $CH_3OCH_2CH_2OCH_3$, $CH_3OCH_2CH_2OH$, $HOCH_2CH_2OH$, $HOCH_2CH_2CH_2OH$, $CH_3-O(CH_2CH_2O)_{n'}H$, $HO(CH_2CH_2O)_{n'}H$ $HO(CH_2CH_2CH_2O)_{n'}H$ where n' represents a number from 2 to 9.

**16.** Precursors according to Claim 14 or Claim 15, characterised in that they have an X-ray diffraction pattern comparable to that which is defined in Table II of the description.

**17.** Application of the precursors according to any one of Claims 14 to 16 to the production, by means of calcination of the said precursors, of zeolites with an aluminosilicate structure belonging to the faujasite structural family and having an Si:Al ratio that is greater than 1 and may exceed 3 and, on the other hand, a symmetrical cubic structure comparable to that of faujasite, the said zeolites being in particular useable, directly or after the exchange of the cations, as adsorbents or as components of catalyst.

**18.** Application according to Claim 17, characterised in that the zeolites obtained by the calcination of the precursor, having parameter value of cubic netting of between 2.4 and 2.5 nm, have an X-ray diffraction pattern comparable to that given in table I of the description and corresponding to a formula which, related to a netting of cubic structure, is written

$$(v\ M_1^{q+})\ (w\ M^{n+})\ \left[(SiO_2)_{192-x}\ (AlO_2)_x\right]^{x-}\ (z\ H_2O)$$

and in which $M_1^{q+}$ designates a q-valent cation of a metal of the group IA group in the Periodic Table of Elements (q=1) or of an alkaline earth metal selected from among Ca, Sr and Ba (q=2) or a nitrogenous monovalent cation (q=1), $M^{n+}$ representing a cation of at least one metal M of the valency n in addition to a cation $M_1^{q+}$ and x, z, v and w are numbers, such that $38 < x \leqq 96$, $z \geqq 0$ and, depending on the state of hydration of the precursor, $0 < v \leqq \frac{x}{q}$ and $0 \leqq w \leqq \frac{s}{n}$, where $qv+wn \geqq x$.